# EUROPÄISCHE PATENTSCHRIFT

(11) **EP 3 743 257 B1**
(45) Veröffentlichungstag und Bekanntmachung des Hinweises auf die Patenterteilung: **11.12.2024**
(21) Anmeldenummer: 18807043.7
(22) Anmeldetag: 16.11.2018
(51) Int. Cl.: B29C 45/33, B29C 45/44, B29L 31/54

(54) **SPRITZGIESSFORM ZUR HERSTELLUNG KOMPLEXER FORMTEILE AUS KUNSTSTOFF**
INJECTION MOULD FOR PRODUCING COMPLEX MOULDED PARTS FROM PLASTIC
MOULE D'INJECTION DESTINÉ À LA FABRICATION DE PIÈCES MOULÉES COMPLEXES EN PLASTIQUE

(30) Priorität: 23.01.2018 CH 792018
(43) Veröffentlichungstag der Anmeldung: 02.12.2020
(73) Patentinhaber: Foboha (Germany) GmbH, 77716 Haslach (DE)
(72) Erfinder: ARMBRUSTER, Rainer, 77709 Wolfach (DE)
(74) Vertreter: Rentsch Partner AG
(86) Internationale Anmeldenummer: PCT/EP2018/081606
(87) Internationale Veröffentlichungsnummer: WO 2019/145063

(56) Entgegenhaltungen:
- EP-A1- 2 883 675
- CN-A- 103 072 239
- CN-A- 104 875 338
- GB-A- 2 278 801
- JP-A- H0 343 224
- JP-A- H09 131 772
- JP-A- S6 397 181
- US-A- 3 266 100
- US-A1- 2018 001 524
- "Spritzgiesstechnik", 1 January 2004, HANSER VERLAG, MÜNCHEN, article STITZ SIEGFRIED ET AL: "6.6.2.1 Aussenschieber", pages: 426 - 427, XP055978123

## Beschreibung

Die vorliegende Erfindung liegt auf dem Gebiet der Spritzgiessformen zum Herstellen von Teilen durch Spritzgiessen aus Kunststoff.

Aus dem Stand der Technik sind Spritzgiessformen zur Herstellung von komplexen Teilen aus Kunststoff bekannt. Unter komplexer Teile werden Teile verstanden, welche aufgrund ihrer Geometrie mit normalen Werkzeugen nicht hergestellt werden können und damit Spritzgiessformen mit quer zur allgemeinen Öffnungsrichtung der Form beweglichen Schiebern erforderlich machen, damit sie überhaupt entformt werden können. Der Grund besteht darin, dass die Teile in der allgemeinen Entformungsrichtung Hinterschnitte aufweisen und damit nicht einfach ausgeworfen werden können. Die Schieber der aus dem Stand der Technik bekannten, herkömmlichen Werkzeuge sind in der Regel direkt mit der Bewegung der Werkzeughälften gekoppelt, so dass nur beim Öffnen, bzw. Schliessen des Werkzeuges die Schieber der Schieberanordnung bewegt werden. Ein Nachteil besteht darin, dass unter anderem durch diese Kopplung Zeitverluste bei der Produktion auftreten können.

DE2065568 von der Crouzet et Cie. wurde 1970 erstmals veröffentlicht und betrifft eine Giessform zum Herstellen von gegossenen Werkstücken, z. B. Nockenblöcken, die an ihrer Aussenseite etwa senkrecht zur Werkstücklängsachse verlaufende Vorsprünge aufweisen. Die Giessform besteht im Wesentlichen aus einem Paar diametral zueinander über einer festen Grundplatte angeordneter, radial beweglicher, mit konisch von oben nach unten verlaufender Aussenseite versehener erster Gleitschuhe. Die ersten Gleitschuhe dienen zur Aufnahme von den gegenseitigen axialen Abstand der Vorsprünge festlegenden ersten Formteilen und aus einem in der Ebene des Paares erster Gleitschuhe zu diesen versetzt angeordneten Paar diametral zueinander angeordneter, radial beweglicher, mit konisch von oben nach unten verlaufender Aussenseite versehener zweiter Gleitschuhe zur Aufnahme von die radiale Erstreckung der Vorsprünge festlegenden zweiten Formteilen und aus einem im geschlossenen Zustand der Form auf den Gleitschuhen angeordneten und sich beim Öffnen der Form axial von den Gleitschuhen fortbewegenden Kopfteil.

DE2422669 von der INA Wälzlager Schäffler KG wurde erstmals 1975 publiziert und betrifft eine Vorrichtung zur Herstellung von Radialwälzlagerkäfigen aus Kunststoff, bei denen zwei Ringborde durch über den Umfang verteilte Stege miteinander verbunden sind. Das Spritzwerkzeug umfasst einen dem Käfiginnendurchmesser entsprechenden zylindrischen Kern, sowie einen Werkzeugaussenteil mit radial bewegbaren Schiebern. Das Spritzwerkzeug weist Ausnehmungen zur gleichzeitigen Herstellung von zwei Käfigen auf, die gleichachsig hintereinander und im Abstand voneinander angeordnet sind. Die Begrenzungen für die einander zugekehrten Stirnflächen der Ringborde werde von den Schiebern gebildet.

CN101508161A von der Ninghai Deke Mould Co. Ltd. wurde 2009 erstmals publiziert und betrifft eine Schieberanordnung, welche mehrere radial verstellbare Schieber aufweist. Der Antrieb der Schieber erfolgt über eine um eine Achse drehbar angeordnete Platte, welche spiralförmig angeordnete Schlitze aufweist, in welche Stifte eingreifen, die an den radial verschiebbaren Schiebern angebracht sind. Die Platte wird über ein vergleichsweise steiles Gewinde angetrieben, welches eine erhebliche Bauhöhe erfordert. Die Schieber sind vergleichsweise weit von der drehbaren Platte angeordnet, was dazu führt, dass die Stifte diesen Abstand überbrücken müssen. Dies führt zu einem ungünstigen Verlauf der Kräfte.

Die Merkmale des Oberbegriffes des Anspruchs 1 sind aus der CN 104 875 338 A und der US 3 266 100 A bekannt. Weitere Spritzgießformen mit Schieberanordnungen sind aus der 103 072 239 B, US 2018/001524 A1, EP 2 883 675 A1, JP H03 43224 A, GB 2 278 801 A, US 3 266 100 A, JP S63 97181 A und JPH09 131772 A bekannt.

Eine Aufgabe der Erfindung besteht darin eine Spritzgiessform mit einer Schieberanordnung zu zeigen, welche eine geringe Bauhöhe aufweist und eine robuste Konstruktion der Schieberanordnung ermöglicht, sowie vom Prinzip her mehrere Ebenen zur Herstellung komplexer Teile zulässt.

Die Erfindung ist im beigefügten Anspruchssatz beschrieben.

Eine erfindungsgemässe Spritzgiessform weist in der Regel eine erste und eine relativ zur ersten in einer ersten Richtung verschiebbare zweite Formhälfte auf, wobei zumindest eine der Formhälften eine Schieberanordnung zur Bildung eines Formhohlraumes umfasst, welcher zur Formung eines komplexen Teils aus Kunststoff dient, indem plastifizierter Kunststoff in diesen eingespritzt und dann ausgehärtet wird. Abhängig von der Geometrie des herzustellenden Teils weist die Schieberanordnung mindestens zwei relativ zueinander zwischen einer Schliess- und einer Offenstellung bewegliche Schieber auf, die je über erste und zweite Führungsmittel bezüglich einem an die Schieber angrenzenden Bestandteil der zugeordneten Formhälfte verschiebbar angeordnet sind. Die Schieber sind in der Regel radial zu einer Achse angeordnet. Je nach Ausgestaltung können sie aber auch seitlich versetzt zu dieser angeordnet sein, so dass die Vektoren der Bewegungen der einzelnen Schieber nicht durch ein gemeinsames Zentrum verlaufen. Weiterhin ist ein Antrieb für die Schieber (Schieberantrieb) vorgesehen, welcher vorzugsweise auf dritten und vierten Führungsmitteln basiert, die miteinander wirkverbunden sind und zum Verschieben der Schieber zwischen der Offen- und der Schliessstellung dienen. Der Antrieb erfolgt mit Vorteil unabhängig von der Position der Formhälften des Spritzgiesswerkzeuges und ist damit, im Unterschied zum Stand der Technik, von der Bewegung des Spritzgiesswerkzeuges entkoppelt. Die dritten und die vierten Führungsmittel des Schieberantriebes liegen mit Vorteil am Bestandteil der Formhälfte an, so dass die Abstände und auftretenden Kräfte möglichst gering und die Konstruktion kompakt gehalten werden kann. Der Schieberantrieb kann selbsthemmend ausgestaltet sein, so dass die Schieber sich nicht ungewollt verstellen können. Der Bestandteil der Formhälfte welcher zur Lagerung der Schieber dient, kann die Schieber zumindest teilweise umschliessen oder an diesen entlang einer oder mehrerer Flächen anliegen.

Erfindungsgemäß weisen die ersten Führungsmittel eine erste Nut und die zweiten Führungsmittel ein in der ersten Nut angeordnetes Oberteil eines Nutensteins auf. Die dritten Führungsmittel werden durch eine zweite Nut und die vierten Führungsmittel durch ein Unterteil des Nutensteins gebildet, welcher in der zweiten Nut angeordnet ist. Die Nut der dritten Führungsmittel sind an und/oder in einer um eine Drehachse drehbaren Scheibe angeordnet, welche auch als Ring ausgestaltet sein kann. Die Scheibe ist vorzugsweise in einer Ebene angeordnet und weist an ihrem Umfang eine Verzahnung auf über welche sie zur Drehung um die Drehachse, z.B. über eine in der Formhälfte integrierte Zahnstange angetrieben werden kann. Aufgrund der sehr kompakten Bauform können einfach mehrere Schieberanordnungen seitlich nebeneinander oder in einem Raster zueinander angeordnet sein.

Die ersten und die dritten Führungsmittel können in einem konstanten und/oder einem über den Verlauf variierenden Winkel zueinander angeordnet sein, sodass beim Drehen der Scheibe um die Drehachse ein Verschieben der zugeordneten Schieber zwischen einer Offen- bzw. einer Schliessstellung bewirkt wird. Je nach Anwendungsgebiet können die Schieber zueinander in einer Ebene und/oder in einem Winkel zu einer Ebene angeordnet sein. Es besteht auch die Möglichkeit, wie in den Ausführungsbeispielen gezeigt wird, Schieber auf mehreren Etagen anzuordnen, welche einzeln oder gemeinsam angetrieben werden. Die Schieber der Schieberanordnung können z.B. zur Bildung eines kugelförmigen Formhohlraumes dienen, mit dem sich kugelförmige Gegenstände, z.B. Golfbälle und dergleichen, effizient herstellen lassen. Durch unterschiedlich angetriebene Schieber können mehrschichtige Gegenstände hergestellt werden, indem gewisse Schieber gezielt stehen bleiben und damit zur Freistellung eines Bereichs für eine weitere Materialkomponente dienen können. Durch die Anordnung der Schieber können an den Oberflächen auch Vertiefungen hergestellt werden, welche unter normalen Umständen zu Hinterschneidungen führen und damit nicht entformt werden können. Auch hier werden Golfbälle als Beispiel genannt, welche aus aerodynamischen Gründen an der Oberfläche Dellen aufweisen können, die mittels herkömmlichen Spritzgiesswerkzeugen nicht hergestellt werden können, da sie sich nicht einfach entformen lassen.

Zwei benachbarte Schieber der Schieberanordnung wirken normalerweise über eine oder mehrere Dichtflächen zusammen. Alternativ oder in Ergänzung können sich die Schieber in Schliessstellung über die Dichtflächen aneinander abstützen. Die Dichtflächen können eben und/oder räumlich gekrümmt sein. Mit Vorteil befinden sich die Dichtflächen in einer Symmetrieebene zwischen zwei einander zugeordneten Schiebern. Die Schieber können bei Bedarf eine Zuhaltefläche aufweisen, welche der Öffnungsrichtung der Schieber entgegen steht und in Schliessstellung der Spritzgiessform mit einer korrespondierend angeordneten Gegenfläche zusammenwirkt, so dass die Schieber entgegen dem beim Spritzgiessen im Innern des Formhohlraumes wirkenden Spritzdrucks verriegelt sind. Damit wird ebenfalls erreicht, dass der Schieberantrieb von negativen Kräften entlastet werden kann. Die Gegenfläche ist mit Vorteil an der anderen Formhälfte der Spritzgiessform angeordnet, so dass in Schliessstellung die Wirkverbindung hergestellt wird. Alternativ oder in Ergänzung kann die Gegenfläche auch an der drehbaren Scheibe angeordnet sein, so dass wenn diese eine definierte Position erreicht, die Gegenfläche gegen die Zuhaltefläche drückt und so die Schieber in Schliessposition gehalten werden. Die Gegenflächen können direkt oder indirekt mit den Zuhalteflächen zusammenwirken. Die Gegenflächen können z.B. an einem vorspringenden Bereich der Scheibe oder einem mit ihr wirkverbundenen Teil angeordnet sein. Je nach Anwendungsgebiet ist mindestens ein Formkern vorhanden, der in Schliessstellung der Spritzgiessform einen Teil der Aussenwand des Formhohlraumes zwischen den Schiebern bildet. Der durch den Formkern gebildete Teil der Aussenwand des Formhohlraumes kann konvex oder konkav ausgebildet sein, d.h. in Schliessstellung in den Formhohlraum hineinragen oder sich ausserhalb desselben befinden. Der Formkern kann durch eine Öffnung in einem Bestandteil der Formhälfte mit dem Formhohlraum korrespondieren. Bei Bedarf können beide Formhälften eine Schieberanordnung aufweisen, wobei die Schieber in Schliessstellung der Spritzgiessform unmittelbar zur Bildung des Formhohlraumes zusammenwirken.

Anhand der in den nachfolgenden Figuren gezeigten Ausführungsbeispiele und der dazugehörigen Beschreibung werden Aspekte der Erfindung näher erläutert. Es zeigen:
- Fig. 1: eine Schieberanordnung in eine perspektivischen Darstellung von schräg oben und vorne in geschlossener Darstellung;
- Fig. 2: die Schieberanordnung gemäss Figur 1 in offenem Zustand;
- Fig. 3: die Schieberanordnung gemäss Figur 1 in einer Seitenansicht;
- Fig. 4: die Schieberanordnung gemäss Figur 1 in einer Draufsicht;
- Fig. 5: eine Schnittdarstellung durch die Schieberanordnung gemäss Figur 4;
- Fig. 6: die Schieberanordnung gemäss Figur 1 in einer Explosionsdarstellung;
- Fig. 7: eine zweite Schieberanordnung in einer perspektivischen Darstellung von schräg oben und vorne, welche nicht Teil der Erfindung ist;
- Fig. 8: eine Seite der Schieberanordnung gemäss Figur 7 ohne feststehende Teile;
- Fig. 9: die Schieberanordnung gemäss Figur 8 in einer Explosionsdarstellung.

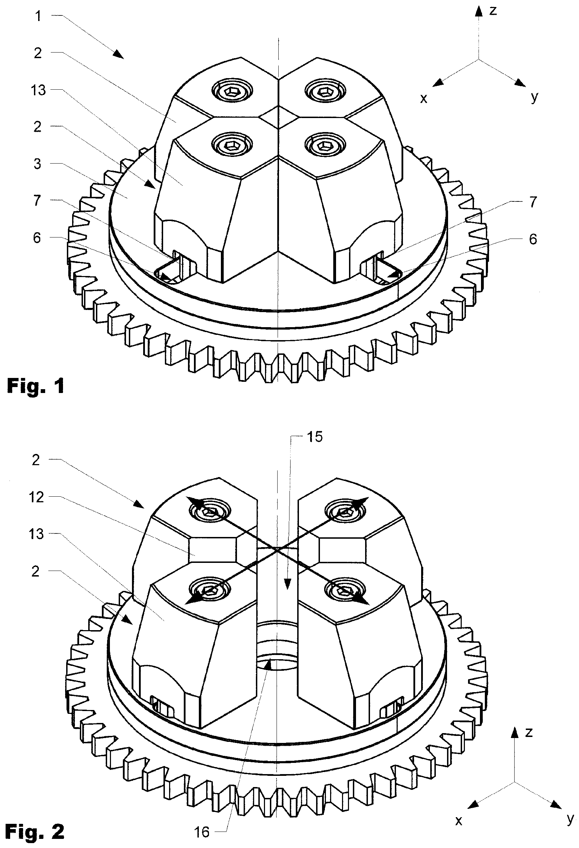

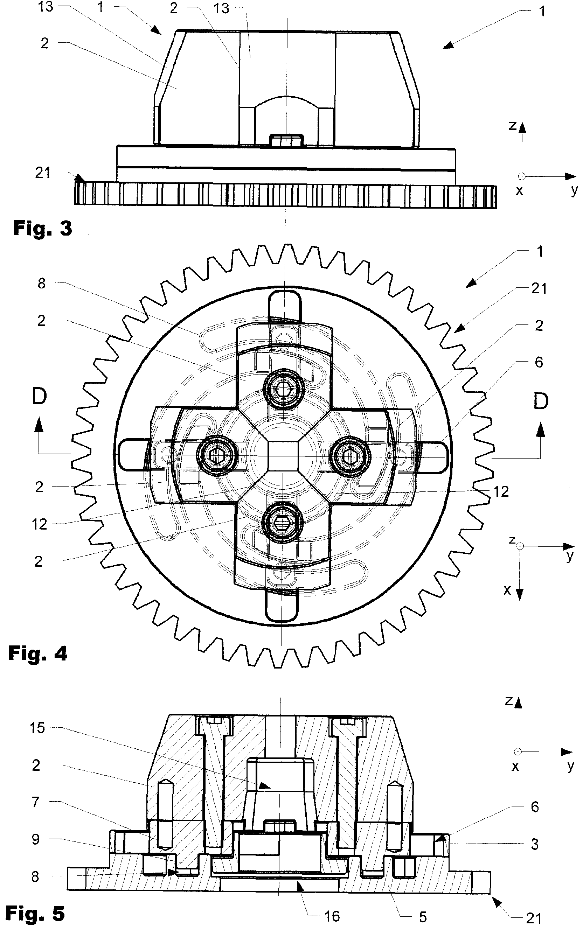

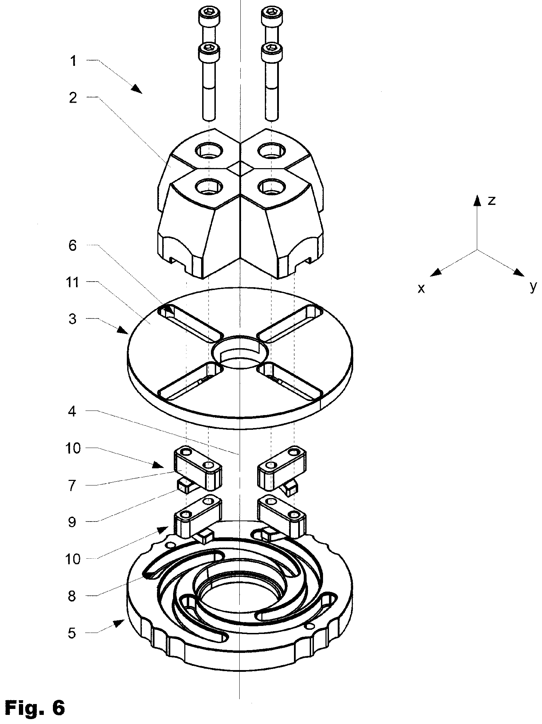

**Figur 1** zeigt eine erste Variante einer Schieberanordnung 1 in einer perspektivischen Darstellung von schräg oben und vorne in einer Schliessstellung. **Figur 2** zeigt die Schieberanordnung 1 gemäss **Figur 1** in einer Offenstellung. **Figur 3** zeigt die Schieberanordnung 1 in einer Seitenansicht und **Figur 4** in einer Ansicht von oben mit den nicht sichtbaren Kanten als gestrichelte Linien dargestellt. **Figur 5** zeigt die Schieberanordnung 1 in einer Schnittdarstellung entlang der Schnittlinie DD gemäss **Figur 4****.** Figur 6 zeigt die Schieberanordnung 1 in einer Explosionsdarstellung.

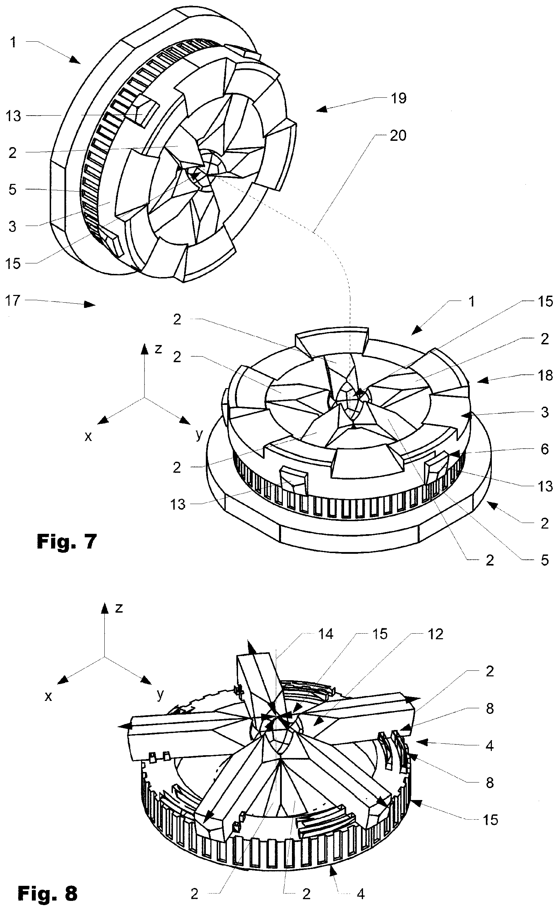

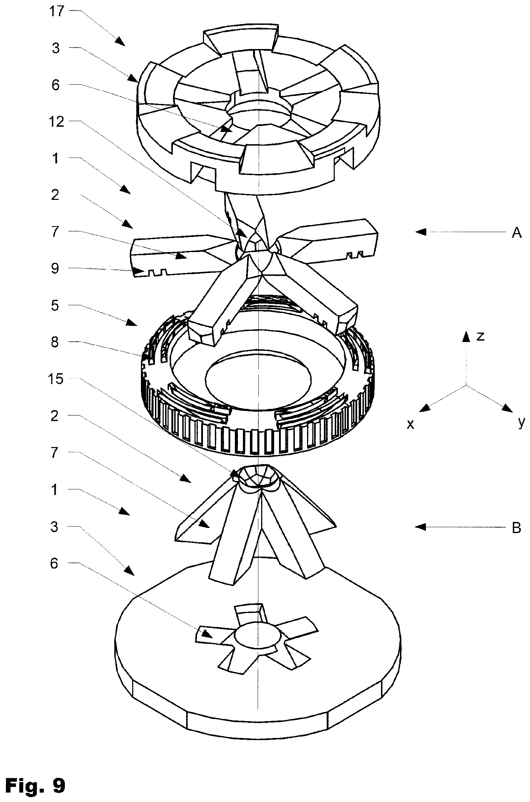

**Figur 7** zeigt eine Variante einer Schieberanordnung 1 in einer perspektivischen Darstellung, welche nicht Teil der Erfindung ist. **Figur 8** zeigt Teile einer Schieberanordnung 1 gemäss **Figur 7** von schräg oben und vorne. **Figur 9** zeigt eine Seite der Schieberanordnung gemäss **Figur 7** in einer Explosionsdarstellung von schräg oben und vorne.

Die Schieberanordnung 1 ist in der Regel in einer Spritzgiessform eingebaut und von aussen nicht oder nur begrenzt sichtbar. Die Spritzgiessform und ihre weiteren Bestandteile sind nicht im Detail dargestellt. Die Spritzgiessform weist eine erste und eine relativ zu dieser verschiebbare zweite Formhälfte auf, welche zur Herstellung von Teilen in einer Spritzgiessmaschine (ebenfalls nicht dargestellt) eingebaut werden. Mit Bezug auf die in den Figuren gezeigte Schieberanordnung 1 werden die erste und die zweite Formhälfte in Richtung der z-Achse (erste Richtung) der Koordinatensysteme der Schieberanordnung 1 bewegt. Diese Richtung entspricht der Öffnungs- bzw. Schliessrichtung der Spritzgiessform, bzw. der allgemeinen Entformungsrichtung der mittels der Spritzgiessform hergestellten Teile.

Die Schieberanordnung 1 dient zur effizienten Herstellung von komplexen Teilen aus spritzgegossenem Kunststoff und dergleichen. Im Unterschied zum Stand der Technik weist die Schieberanordnung 1 einen sehr geringen Platzbedarf, bzw. eine sehr geringe Bauhöhe auf. Weiterhin erlaubt die Schieberanordnung 1 die gleichzeitige oder zeitliche versetzte Steuerung von mehreren Schiebern 2, welche bei Bedarf auch in mehreren Ebenen parallel in einer Ebene oder räumlich in einem Winkel zu einander angeordnet sein können.

Die Schieber 2 der Schieberanordnung 1 sind gegenüber einem Bestandteil 3 der Formhälfte über erste und zweite Führungsmittel 6, 7 verschiebbar gelagert. Der Bestandteil 3 der Formhälfte kann, wie in den **Figuren 1** bis **6** gezeigt, die Form einer Platte aufweisen und/oder die Schieber 2 z.B. in eine Formplatte integriert sein und diese zumindest teilweise ganz umschliessen (vgl. **Figuren 7** bis **9**)**.** Der Bestandteil 3 kann, je nach Anwendungsgebiet, aus einem Teil bestehen oder mehrteilig aufgebaut sein.

Die Schieber 2 werden über eine Schieberantrieb 4 zwischen einer offenen und einer geschlossenen Position hin und her bewegt. Wie in **Figur 6** zu erkennen ist, weist die Schieberanordnung 1 neben den Schiebern 2 und dem Bestandteil 3, welches zur Lagerung der Schieber 2 dient, eine um eine Achse 14 (z-Richtung) drehbare Scheibe 5 auf. Die Scheibe 5 weist mehrere dritte Führungsmittel 8 auf, welche in der gezeigten Ausführungsform in Form von Nuten 8, in einer Oberfläche eingebracht sind. In die Nuten 8 greifen in montierten Zustand vierte Führungsmittel 9 ein.

Die Schieber 2 sind aus der Sicht des Betrachters oberhalb der Platte 3 angeordnet und gegenüber dieser mittels der ersten und der zweiten Führungsmittel 6, 7 hier radial verschiebbar gelagert (andere Richtungen, welche z.B. nicht durch das Zentrum verlaufen, bzw. zueinander versetzt sind, sind möglich). Bei den ersten Führungsmitteln 6 handelt es sich in der gezeigten Variante um radial verlaufende Nuten 6. In diesen sind pro Schieber 2 ein mit diesen wirkverbundenes Oberteil 7 eines speziell geformten, doppeltwirkenden Nutensteines 10 in Richtung der Nuten 6 verschiebbar angeordnet. Diese Oberteile 7 durchragen eine ihnen zugeordnete Nut 6 in vertikaler Richtung und münden an ihrem unteren Ende in ein Unterteil 9 des Nutensteines 10. Die Unterteile 9 der Nutensteine 10 sind je in einer spiralförmigen Nut 8 einer Scheibe 5 und in dieser in Umfangsrichtung entlang dem Verlauf der Nut 8 verschiebbar angeordnet, während dem die Scheibe 5 um eine Drehachse 14 bezüglich der Platte 3 gedreht wird. Die Oberteile 7 und Unterteile 9 der Nutensteine 10 sind mit Vorteil einteilig gefertigt. Je nach Anwendungsgebiet sind andere, auch mehrteilige, Ausgestaltungen möglich. Wie in der Explosionsdarstellung gemäss Figur 6 zu erkennen ist, sind das Oberteil 7 und das Unterteil 9 eines Nutensteines 10 im Wesentlichen rechtwinklig angeordnet und auf die Form der auszuführenden Bewegung angepasst. Sie weisen in Bewegungsrichtung eine längliche Ausgestaltung auf, welche eine Vergrösserung der Kontaktfläche und damit eine bessere Verteilung der Kräfte bewirkt.

Je nachdem, welche Anforderungen die Geometrie des herzustellenden Teiles stellt, können die Schieber auch entlang einer Geraden verlaufend angeordnet sein, welche nicht durch ein Zentrum verläuft. Unter Zentrum wird dabei ein Punkt verstanden, in welchem sich die Bewegungsrichtungen der Schieber treffen. Das erfindungsgemässe Konzept ermöglicht Varianten, welche einen nicht geraden Bewegungsverlauf aufweisen, indem die Führungsmittel entsprechend ausgestaltet sind.

Die Schieber 2 sind so ausgestaltet, dass sie im geschlossenen Zustand zumindest einen Teil eines Formhohlraumes 1 5 bilden, der zur Formung eines Teils aus Kunststoff dient, indem plastifizierter Kunststoff in diesen eingespritzt und dann ausgehärtet wird. Der Formhohlraum 15 weist in der Regel unterhalb und/oder oberhalb zwischen den Schiebern 2 eine Öffnung 16 auf, welche in Schliessstellung der Spritzgiessform zur Aufnahme und Umschliessung eines Formkernes (nicht näher dargestellt) dient, welcher ebenfalls Bestandteil des Formhohlraumes ist und einen Innen- und/oder Aussenkontur des herzustellenden Teils bildet. Der Formkern kann beim Öffnen der Schieber 2 zur Halterung des zwischen den Schiebern hergestellten Teils dienen.

In Schliessstellung wirken je zwei Schieber 2 entlang mindestens einer Dichtfläche 12 in der Regel seitlich dichtend zusammen. Die Schieber 2 können bei Bedarf eine Zuhaltefläche 13 aufweisen, welche den Schieberantrieb 4, in Schliessstellung der Spritzgiessform, vom im Formhohlraum wirkenden Spritzdruck entlastet. Die Zuhalteflächen 13 sind in der gezeigten Anordnung auf der hinteren Seite der Schieber 2 angeordnet und gegenüber der oben erwähnten Schliessrichtung (z-Richtung) der Spritzgiessform geneigt. Die Spritzgiessform weist eine zur Schliessfläche korrespondierend ausgebildete Gegenfläche auf, welche an der gegenüberliegenden Formhälfte angebracht ist und in Schliessstellung der Spritzgiessform von hinten in Schliessrichtung kontrolliert auf die Zuhalteflächen 13 der Schieber 2 drückt, so dass diese zumindest über die Dichtflächen 12 aneinander anstehen.

**Figur 7** zeigt schematisch eine erste und eine relativ zur ersten in einer ersten Richtung (z-Achse) verschiebbare zweite Formhälfte 18, 19 (schematisch durch eine gestrichelte Linie 20 dargestellt). Damit das Innenleben der zweiten Formhälfte 19 sichtbar wird, ist diese um 90° gekippt dargestellt. In der gezeigten Anordnung, die nicht Teil der Erfindung ist, sind beide Formhälften 18, 19 gleich aufgebaut und weisen je eine Schieberanordnung 1 zur Bildung eines hier kugelförmigen Formhohlraumes 15 auf, welcher wie z.B. bei der Oberfläche eines Golfballs Hinterschnitte (nicht näher dargestellt) aufweisen kann, welche durch die Schieber entformt werden können. Andere Geometrien sind natürlich möglich. In der gezeigten Anordnung, die nicht Teil der Erfindung ist, wirken die Schieber 2 beider

Formhälften 18, 19 in Schliessstellung der Spritzgiessform 17 unmittelbar zusammen. Jede Formhälfte 18, 19 weist mehrere relativ zueinander zwischen einer Schliess- und einer Offenstellung bewegliche Schieber 2 auf, die je über erste und zweite Führungsmittel 6, 7 bezüglich einem an die Schieber 2 angrenzenden Bestandteil 3 der zugeordneten Formhälfte 17, 18 verschiebbar angeordnet ist.

Wie in den **Figuren 8** und **9** zu erkennen ist, sind die Schieber 2 über einen Schieberantrieb 4 mit dritten und vierten Führungsmitteln 8, 9, welche miteinander wirkverbunden sind und zum Verschieben der Schieber 2 zwischen der Offen- und der Schliessstellung dienen. Wie zu erkennen ist, liegen die dritten und die vierten Führungsmittel 8, 9 des Schieberantriebes 4 am Bestandteil 3 der Formhälfte an. In der gezeigten Anordnung, die nicht Teil der Erfindung ist, umschliesst der Bestandteil 3 der Formhälfte die Schieber 2 zumindest teilweise. Im Unterschied hierzu liegt er in der Spritzgießform gemäss den **Figuren 1** bis **6** nur seitlich an. Bei den ersten Führungsmitteln handelt es sich hier pro Schieber 2 um eine Öffnung 6 im Bestandteil 3 der Formhälfte. Das zweite Führungsmittel wird durch den Schieber 2 selber gebildet, welcher in der Öffnung angeordnet und durch dessen Innenwände (nicht näher dargestellt) geführt wird. Die dritten Führungsmittel werden durch einen Kamm 8 und die vierten Führungsmittel durch eine Nut 9 im Schieber 2 gebildet. Wie zu erkennen ist, sind die dritten Führungsmittel 8 an der um die Drehachse 14 drehbaren Scheibe 5 angeordnet. In der gezeigten Variante ist die Scheibe 5 ringförmig ausgestaltet und weist sowohl unten als auch oben dritte Führungsmittel 8 auf, welche zum Antrieb der auf zwei Etagen angeordneten Schiebern 2 dienen. Die ersten und die dritten Führungsmittel 6, 8 sind in einem Winkel zueinander angeordnet, sodass beim Drehen der Scheibe um die Drehachse 14 ein Verschieben der zugeordneten Schieber 2 zwischen einer Offen- bzw. einer Schliessstellung bewirkt wird. Je zwei Schieber 2 wirken in der Schliessstellung über Dichtflächen 12 zusammen. Dies gilt sowohl für benachbarte Schieber 2 einer Formhälfte 18, 19 (pro Etage als auch über mehrere Etagen) als auch für einander zugeordnete Schieber 2 der ersten und der zweiten Formhälfte 18, 19.

Die Schieber 2 können eine Zuhaltefläche 13 aufweisen, welche in Schliessstellung der Spritzgiessform mit einer korrespondierend angeordneten Gegenfläche der anderen Formhälfte der Spritzgiessform zusammenwirkt, so dass die Schieber 2 in Schliessstellung entgegen dem im Innern des Formhohlraumes 15 wirkenden Spritzdrucks verriegelt sind. Im Unterschied zur ersten Variante ist hier kein Formkern vorhanden, der in Schliessstellung der Spritzgiessform einen Teil der Aussenwand des Formhohlraumes 15 zwischen den Schiebern 2 bildet. Der gesamte Formhohlraum 15 wird durch die Schieber 2 gebildet.

**Figur 9** zeigt schematisch eine Formhälfte 18, 19 der Spritzgiessform 17 gemäss **Figur** 7, die nicht Teil der Erfindung ist, in einer Explosionsdarstellung bezüglich der z-Achse zerlegt. Zu erkennen sind die Schieber 2, welche hier in zwei Gruppen auf zwei Etagen A, B angeordnet sind. Die Schieber 2 dienen in Schliessstellung der Spritzgiessform zur Bildung eines kugelförmigen Formhohlraumes 15. Anders gestaltete Formhohlräume sind möglich. Die Schieber 2 werden über die hier ringförmige Scheibe 5 über die dritten und die vierten Führungsmittel 8, 9 angetrieben. Die Schieber 2 sind in Nuten, bzw. Öffnungen 6 der Bestandteile 3 der Formhälfte linear verschiebbar gelagert. In der gezeigten Ausführungsform sind sie in horizontaler Richtung (x, y-Ebene) radial bezüglich der Drehachse 14 ausgerichtet. In vertikaler Richtung (z-Achse) sind sie in einem Winkel zur Drehachse 14 angeordnet.

### LISTE DER BEZUGSZEICHEN

- 1: Schieberanordnung
- 2: Schieber
- 3: Bestandteil Formhälfte, Platte, Formplatte (Spritzgiessform)
- 4: Schieberantrieb
- 5: Scheibe
- 6: Erste Führungsmittel, erste Nut
- 7: Zweite Führungsmittel, Oberteil Nutenstein
- 8: Dritte Führungsmittel, zweite Nut (Scheibe)
- 9: Vierte Führungsmittel, Unterteil Nutenstein
- 10: Nutenstein
- 11: Oberfläche (Bestandteil Formhälfte)
- 12: Dichtfläche (Schieber)
- 13: Zuhaltefläche (Schieber)
- 14: Drehachse
- 15: Formhohlraum
- 16: Öffnung (Formhohlraum)
- 17: Spritzgiessform
- 18: Erste Formhälfte
- 19: Zweite Formhälfte
- 20: Öffnungsbewegung
- 21: Verzahnung (Scheibe)

## Patentansprüche

1. Spritzgiessform mit
a. einer ersten und einer relativ zur ersten in einer ersten Richtung (z) verschiebbaren zweiten Formhälfte, wobei zumindest eine der Formhälften eine Schieberanordnung (1) zur Bildung eines Formhohlraumes (1 5) aufweist, mit
b. mindestens zwei relativ zueinander zwischen einer Schliess- und einer Offenstellung beweglichen Schiebern (2), die je über erste und zweite Führungsmittel (6, 7) bezüglich einem an den Schiebern (2) angrenzenden Bestandteil (3) der zugeordneten Formhälfte verschiebbar angeordnet ist, wobei die Schieber (2) oberhalb des angrenzenden Bestandteils (3) angeordnet sind, wobei
c. jeder Schieber (2) eine Zuhaltefläche (13) aufweist, welche in Schliessstellung der Spritzgiessform mit einer korrespondierend angeordneten Gegenfläche der anderen Formhälfte der Spritzgiessform zusammenwirkt, so dass die Schieber (2) entgegen dem im Innern des Formhohlraumes (15) wirkenden Spritzdrucks verriegelt sind, sowie
d. einem Schieberantrieb (4) mit dritten und vierten Führungsmitteln (8, 9), welche miteinander wirkverbunden sind und zum Verschieben der Schieber (2) zwischen der Offen- und der Schliessstellung dienen,
**dadurch gekennzeichnet, dass**
i) die ersten Führungsmittel eine erste Nut (6) und die zweiten Führungsmittel ein in der ersten Nut (6) angeordnetes Oberteil (7) eines Nutensteins (10) sind und
ii) die dritten Führungsmittel eine zweite Nut (8) und die vierten Führungsmittel ein Unterteil (9) des Nutensteins (10) sind, wobei die dritten Führungsmittel (8) an und/oder in einer um eine Drehachse (14) drehbaren Scheibe (5) angeordnet sind und
iii) die ersten und die dritten Führungsmittel (6, 8) in einem Winkel zueinander angeordnet sind, sodass beim Drehen der Scheibe um die Drehachse (14) ein Verschieben der zugeordneten Schieber (2) zwischen einer Offenen- bzw. einer Schliessstellung bewirkt wird und
iv) das Oberteil (7) und das Unterteil (9) in Bewegungsrichtung eine längliche Ausgestaltung aufweisen, welche eine Vergrösserung der Kontaktfläche und damit eine bessere Verteilung der Kräfte bewirkt.

2. Spritzgiessform gemäss Patentanspruch 1, **dadurch gekennzeichnet, dass** die dritten und vierten Führungsmittel (8, 9) des Schieberantriebes (4) am Bestandteil (3) der Formhälfte anliegen.

3. Spritzgiessform gemäss einem der vorangehenden Patentansprüche, **dadurch gekennzeichnet, dass** der Bestandteil (3) der Formhälfte die Schieber (2) zumindest teilweise umschliesst oder an diesen entlang einer Fläche anliegt.

4. Spritzgiessform gemäss einem der vorangehenden Patentansprüche, **dadurch gekennzeichnet, dass** die Schieber (2) zueinander in einer Ebene und/oder in einem Winkel zu einer Ebene angeordnet sind.

5. Spritzgiessform gemäss einem der vorangehenden Patentansprüche, **dadurch gekennzeichnet, dass** die Schieber (2) zur Bildung eines kugelförmigen Formhohlraumes (15) dienen.

6. Spritzgiessform gemäss Patentanspruch 5, **dadurch gekennzeichnet, dass** die Schieber (2) zur Bildung eines kugelförmigen Formhohlraumes (15) mit lokalen Hinterschnitten dienen.

7. Spritzgiessform gemäss einem der vorangehenden Patentansprüche, **dadurch gekennzeichnet, dass** je zwei Schieber (2) in der Schliessstellung über eine Dichtfläche (12) zusammenwirken.

8. Spritzgiessform gemäss einem der vorangehenden Patentansprüche, **dadurch gekennzeichnet, dass** mindestens ein Formkern vorhanden ist, der in Schliessstellung der Spritzgiessform einen Teil der Aussenwand des Formhohlraumes (15) zwischen den Schiebern (2) bildet.

9. Spritzgiessform gemäss Patentanspruch 8, **dadurch gekennzeichnet, dass** der Formkern durch eine Öffnung in einem Bestandteil (3) der Formhälfte mit dem Formhohlraum (15) korrespondiert.

10. Spritzgiessform gemäss einem der vorangehenden Patentansprüche, **dadurch gekennzeichnet, dass** beide Formhälften (18, 19) eine Schieberanordnung (1) aufweisen, wobei die Schieber (2) in Schliessstellung der Spritzgiessform (17) unmittelbar zusammenwirken.

## Claims

1. An injection mold having
a. a first mold half and a second mold half, which is displaceable relative to the first mold half in a first direction (z), wherein at least one of the mold halves having a slide arrangement (1) for forming a mold cavity (15), having
b. at least two slides (2) which are movable relative to one another between a closed position and an open position, each of which is arranged such that it can be displaced via first and second guide means (6, 7) in relation to a component (3) of the associated mold half that is adjacent to the slides (2), wherein the slides (2) being arranged above the adjacent component (3), wherein
c. each slide (2) has a holding-shut surface (13) which, in the closed position of the injection mold, interacts with a correspondingly arranged counter-surface of the other half of the injection mold, such that the slides (2) are locked against the injection pressure acting inside the mold cavity (15), and
d. a slide drive (4) having third and fourth guide means (8, 9) which are interconnected and serve to displace the slides (2) between the open and closed positions,
**characterized in that**
i) the first guide means are a first groove (6), and the second guide means are an upper part (7), which is arranged in the first groove (6), of a sliding block (10), and
ii) the third guide means are a second groove (8), and the fourth guide means are a lower part (9) of the sliding block (10), wherein the third guide means (8) are arranged on and/or in a disk (5) which can be rotated about an axis of rotation (14), and
iii) the first and the third guide means (6, 8) are arranged at an angle to one another such that, upon rotation of the disk about the axis of rotation (14), a displacement of the associated slides (2) between an open or a closed position is brought about and
iv) the upper part (7) and the lower part (9) have an elongated design in the direction of movement, which causes an increase in the contact area and thus a better distribution of the forces.

2. The injection mold as claimed in patent claim 1, **characterized in that** the third and fourth guide means (8, 9) of the slide drive (4) bear against the component (3) of the mold half.

3. The injection mold as claimed in either of the preceding patent claims, **characterized in that** the component (3) of the mold half at least partially encloses the slides (2) or bears against them along a surface.

4. The injection mold as claimed in one of the preceding patent claims, **characterized in that** the slides (2) are arranged with respect to one another in one plane and/or at an angle to one plane.

5. The injection mold as claimed in one of the preceding patent claims, **characterized in that** the slides (2) serve to form a spherical mold cavity (1 5).

6. The injection mold as claimed in patent claim 5, **characterized in that** the slides (2) serve to form a spherical mold cavity (15) with local undercuts.

7. The injection mold as claimed in one of the preceding patent claims, **characterized in that** in each case two slides (2) interact in the closed position via a sealing surface (12).

8. The injection mold as claimed in one of the preceding patent claims, **characterized in that** at least one mold core is present which, in the closed position of the injection mold, forms part of the outer wall of the mold cavity (15) between the slides (2).

9. The injection mold as claimed in patent claim 8, **characterized in that** the mold core corresponds with the mold cavity (15) through in an opening in a component (3) of the mold half.

10. The injection mold as claimed in one of the preceding patent claims, **characterized in that** the two mold halves (18, 19) have a slide arrangement (1), wherein the slides (2) directly interact in the closed position of the injection mold (17).

## Revendications

1. Moule d'injection comprenant
a. un premier demi-moule et un deuxième demi-moule pouvant être déplacés par rapport au premier dans une première direction (z), dans lequel au moins l'un des demi-moules présente un ensemble de curseur (1) pour former une cavité de moule (15), avec
b. au moins deux curseurs (2) mobiles l'un par rapport à l'autre entre une position de fermeture et une position d'ouverture, qui sont arrangés de manière à pouvoir être déplacés chacun par l'intermédiaire d'un premier et d'un deuxième moyen de guidage (6, 7) par rapport à un composant (3) du demi-moule associé, adjacent aux curseurs (2), les curseurs (2) étant arrangés au-dessus du composant(3) adjacent, dans lequel
c. chaque curseur (2) présente une surface d'interception (13) qui, en position de fermeture du moule d'injection, coopère avec une contre-surface arrangée de manière correspondante de l'autre demi-moule du moule d'injection, de sorte que les curseurs (2) sont verrouillés contre la pression d'injection agissant à l'intérieur de la cavité du moule (15), ainsi que
d. un entraînement de curseur (4) avec des troisième et quatrième moyens de guidage (8, 9), qui sont interconnectés et servent à déplacer les curseurs (2) entre la position ouverte et la position fermée,
**caractérisé en ce que**
i) les premiers moyens de guidage sont une première rainure (6) et les deuxièmes moyens de guidage sont une partie supérieure (7) d'un coulisseau (10) arrangée dans la première rainure (6), et
ii) les troisièmes moyens de guidage sont une deuxième rainure (8) et les quatrièmes moyens de guidage sont une partie inférieure (9) du coulisseau (10), les troisièmes moyens de guidage (8) étant arrangés sur et/ou dans un disque (5) pouvant tourner autour d'un axe de rotation (14), et
iii) les premiers et troisièmes moyens de guidage (6, 8) sont arrangés selon un angle l'un par rapport à l'autre, de sorte que lors de la rotation du disque autour de l'axe de rotation (14), un déplacement des curseurs (2) associés entre une position ouverte ou une position fermée est provoqué, et
iv) la partie supérieure (7) et la partie inférieure (9) présentent une configuration allongée dans le sens du mouvement, ce qui entraîne une augmentation de la surface de contact et donc une meilleure répartition des forces.

2. Moule d'injection selon la revendication 1, **caractérisé en ce que** les troisième et quatrième moyens de guidage (8, 9) de l'entraînement de curseur (4) s'appliquent contre le composant (3) du demi-moule.

3. Moule d'injection selon l'une des revendications précédentes, **caractérisé en ce que** le composant (3) du demi-moule entoure au moins partiellement les curseurs (2) ou est en contact avec ceux-ci le long d'une surface.

4. Moule d'injection selon l'une des revendications précédentes, **caractérisé en ce que** les curseurs (2) sont arrangés l'un par rapport à l'autre dans un plan et/ou selon un angle par rapport à un plan.

5. Moule d'injection selon l'une des revendications précédentes, **caractérisé en ce que** les curseurs (2) servent à former une cavité du moule (15) de forme sphérique.

6. Moule d'injection selon la revendication 5, **caractérisé en ce que** les curseurs (2) servent à former une cavité du moule (15) de forme sphérique avec des contre-dépouilles locales.

7. Moule d'injection selon l'une des revendications précédentes, **caractérisé en ce que** deux curseurs (2) coopèrent chacun en position de fermeture par l'intermédiaire d'une surface d'étanchéité (12).

8. Moule de moulage par injection selon l'une des revendications précédentes, **caractérisé en ce qu'**il existe au moins un noyau de moule qui, en position de fermeture du moule de moulage par injection, forme une partie de la paroi extérieure de la cavité du moule (15) entre les curseurs (2).

9. Moule d'injection selon la revendication 8, **caractérisé en ce que** le noyau de moule correspond à la cavité du moule (15) à travers une ouverture dans un composant (3) du demi-moule.

10. Moule d'injection selon l'une des revendications précédentes, **caractérisé en ce que** les deux demi-moules (18, 19) présentent un ensemble de curseur (1), dans lequel les curseurs (2) coopèrent directement en position de fermeture du moule d'injection (17).
